(19) Europäisches Patentamt / European Patent Office / Office européen des brevets

(11) **EP 1 649 652 B1**

(12) **EUROPÄISCHE PATENTSCHRIFT**

(45) Veröffentlichungstag und Bekanntmachung des Hinweises auf die Patenterteilung:
**19.03.2008   Patentblatt 2008/12**

(21) Anmeldenummer: **04741974.2**

(22) Anmeldetag: **08.07.2004**

(51) Int Cl.:
*H04L 25/03* (2006.01)     *H04L 25/02* (2006.01)

(86) Internationale Anmeldenummer:
**PCT/EP2004/051402**

(87) Internationale Veröffentlichungsnummer:
**WO 2005/013574 (10.02.2005 Gazette 2005/06)**

(54) **VERFAHREN ZUR VORFILTERUNG VON TRAININGSSEQUENZEN IN EINEM FUNKKOMMUNIKATIONSSYSTEM**

METHOD FOR PRE-FILTERING TRAINING SEQUENCES IN A RADIOCOMMUNICATION SYSTEM

PROCEDE DE PREFILTRAGE DE SEQUENCES D'APPRENTISSAGE DANS UN SYSTEME DE RADIOCOMMUNICATION

(84) Benannte Vertragsstaaten:
**AT BE BG CH CY CZ DE DK EE ES FI FR GB GR HU IE IT LI LU MC NL PL PT RO SE SI SK TR**

(30) Priorität: **28.07.2003   EP 03017077**

(43) Veröffentlichungstag der Anmeldung:
**26.04.2006   Patentblatt 2006/17**

(73) Patentinhaber: **Nokia Siemens Networks GmbH & Co. KG**
**81541 München (DE)**

(72) Erfinder:
- **FREY, Thomas**
  **89081 Ulm (DE)**
- **KIESSLING, Mario**
  **71263 Weil der Stadt (DE)**
- **REINHARDT, Markus**
  **89231 Neu-Ulm (DE)**
- **VIERING, Ingo**
  **81539 München (DE)**

(56) Entgegenhaltungen:
**WO-A-01/37442**

- **KIESSLING, M.; SPEIDEL, J.; GENG, N.; REINHARDT, M.: "Performance analysis of MIMO maximum likelihood receivers with channel correlation, colored gaussian noise, and linear prefiltering" ICC '03. IEEE INTERNATIONAL CONFERENCE ON COMMUNICATIONS, Bd. 5, 11. Mai 2003 (2003-05-11), - 15. Mai 2003 (2003-05-15) Seiten 3026-3030, XP002270467 USA**

- **KIESSLING M ET AL: "Statistical prefiltering for MIMO systems with linear receivers in the presence of transmit correlation" 57TH IEEE SEMIANNUAL VEHICULAR TECHNOLOGY CONFERENCE. VTC 2003 (CAT. NO.03CH37431), JEJU, SOUTH KOREA, Bd. 1, 22. April 2003 (2003-04-22), - 25. April 2003 (2003-04-25) Seiten 267-271, XP002270468 Piscataway, NJ, USA ISBN: 0-7803-7757-5**

- **KIESSLING M ET AL: "Statistical prefiltering for MMSE and ML receivers with correlated MIMO channels" WCNC 2003 IEEE WIRELESS COMMUNICATIONS AND NETWORKING CONFERENCE RECORD (CAT. NO.03TH8659), NEW ORLEANS, LA, USA, 16-20 MARCH 2003, Bd. 2, 16. März 2003 (2003-03-16), - 20. März 2003 (2003-03-20) Seiten 919-924, XP002270469 Piscataway, NJ, USA ISBN: 0-7803-7700-1**

- **SHENGLI ZHOU ET AL: "Subspace-based (semi-) blind channel estimation for block precoded space-time OFDM" IEEE TRANSACTIONS ON SIGNAL PROCESSING, MAY 2002, IEEE, USA, Bd. 50, Nr. 5, Mai 2002 (2002-05), Seiten 1215-1228, XP002270470 ISSN: 1053-587X**

**Beschreibung**

Die Erfindung betrifft ein Verfahren zur Vorfilterung von Trainingssequenzen in einem Funkkommunikations-system, bei dem zumindest sendeseitig eine aus mehreren Antennensystemen bestehende Antennenanordnung verwendet wird.

Bei Funkkommunikationssystemen, wie beispielsweise bei Mobilfunksystemen, werden zur Steigerung einer Datenübertragungskapazität sowohl sendeseitig als auch empfangsseitig jeweils aus mehreren Antennensystemen bestehende Antennenanordnungen verwendet. Derartige Funkkommunikationssysteme werden als sogenannte "Multiple Input Multiple Output", kurz "MIMO", Funkkommunikationssysteme bezeichnet.

Mit Hilfe spezieller Signalverarbeitungsalgorithmen wird ein digitaler Eingangsdatenstrom in Teildatenströme aufgeteilt und über die sendeseitigen Antennensysteme abgestrahlt. Aufgrund der räumlich angeordneten Antennensysteme sind räumliche Funkkanalkoeffizienten ableitbar, die Eigenschaften von Funkübertragungskanälen repräsentieren. Die Funkkanalkoeffizienten beschreiben beispielsweise einen Signalschwund (Fading), eine spezifische Ausbreitung, eine Dämpfung, Störungen, usw., im Funkübertragungskanal.

Die Funkkanalkoeffizienten werden beispielsweise sendeseitig für die Vorfilterung der Teildatenströme verwendet, um diese im Hinblick auf einen erhöhten Datendurchsatz oder im Hinblick auf eine erhöhte Übertragungsqualität optimal an die Funkübertragung anzupassen. Beispielsweise wird durch die Vorfilterung für jeden Teildatenstrom eine individuelle Sendeleistungsanpassung und/oder eine individuelle Modulation durchgeführt.

Die Funkkanalkoeffizienten sind bei einem MIMO-Funkkommunikationssystem nur sehr aufwändig mit Hilfe einer Kanalschätzung zu ermitteln. So ergeben sich bei einer Anzahl von $M_{TX}$ Sendeantennen und bei einer Anzahl von $M_{RX}$ Empfangsantennen insgesamt $M_{RX}$ x $M_{TX}$ zu schätzende Funkkanalkoeffizienten für $M_{RX}$ x $M_{TX}$ Funkübertragungskanäle. Konkret ergeben sich für ein MIMO-Funkkommunikationssystem mit vier Sende- und mit vier Empfangsantennensystemen insgesamt 16 Funkübertragungskanäle, die durch 16 Funkkanalkoeffizienten beschrieben werden.

Eine genaue Schätzung der Funkkanalkoeffizienten bedingt insbesondere bei einem FDD-Funkkommunikationssytem ("Frequency Division Duplex", FDD) Trainingssequenzen großer Länge, die wiederum eine beträchtliche Anzahl von Funkübertragungsressourcen belegen.

Aus "Performance Analysis of MIMO Maximum Likelihood Receivers with Channel Correlation, Colored Gaussian Noise, and Linear Prefiltering",Mario Kiessling et al, ICC 2003, IEEE International Conference on Communications, Bd 5, 11.05.2003 - 15.05.2003, Seiten 3026 bis 3030, XP002270467, USA, ist eine senderseitige Vorfilterung von zu sendenden Symbolen bekannt. Durch die beschriebene Vorfilterung wird eine Empfangsverbesserung der Symbole hinsichtlich der Bitfehlerrate BER und hinsichtlich des Signal-Rausch-Abstands SNR erreicht, wobei eine auf statistischen Algorithmen basierende Vorfilterung erfolgt.

Aus "Statistical Prefiltering for MIMIO Systems with Linear Receivers in the Presence of Transmit Correlation", Kiessling, 57th IEEE Semiannual Vehicular Technology Conference, VTC 2003, Jeju, South Korea, Bd 1, 22.04.2003 - 25.04.2003, Seiten 267 - 271, XP002270468, ist eine sendeseitige Vorfilterung bekannt, bei deren Dimensionierung auf eine genaue Kenntnis von "Channel State Informations, CSI" verzichtet wird.

Die Vorfilterung wird anhand von statistischen Werten durchgeführt.

Aus "Statistical Prefiltering for MMSE and ML Receivers with Correlated MIMO Channels", Kiessling, WCNC 2003, IEEE Wireless Communications and Networking Conference Record, New Orleans, LA, USA, 16. - 20.03.2003, Bd 2, Seiten 919 - 924, XP002270469 ist eine weitere auf statistischen Werten basierende Vorfilterung bekannt.

Es ist Aufgabe der Erfindung, in einem Funkkommunikations-system, insbesondere in einem MIMO-Funkkommunikations-system, eine aufwandsarme bzw. eine bezüglich der Genauigkeit verbesserte Schätzung von Funkkanalkoeffizienten zu realisieren.

Die Aufgabe der Erfindung wird durch die Merkmale des Patentanspruchs 1 gelöst. Vorteilhafte Weiterbildungen sind in den Unteransprüchen angegeben.

Ein erfindungsgemäße Vorfilter wird sendeseitig vor einer Antennenanordnung derart angeordnet, dass Trainingssequenzen über das Vorfilter an Antennensysteme der Antennenanordnung zur Abstrahlung zugeführt werden. Anhand der Trainingssequenzen erfolgt eine Kanalschätzung zur Ermittlung von Funkübertragungskanaleigenschaften, die durch räumliche Korrelationen beschrieben werden. Das Vorfilter wird in Abhängigkeit der räumlichen Korrelationen derart dimensioniert, dass ein vorgegebener Fehlerwert eines empfangsseitig zur Kanalschätzung verwendeten Algorithmus erzielt wird.

Dieser empfangsseitige Fehlerwert ist beispielsweise als zu minimierender Fehlerwert vorgegeben oder es soll ein vorgegebener Fehlerwert mittels einer Variation der Länge der Trainingssequenzen erzielt werden.

Die Funkübertragungskanaleigenschaften werden empfangsseitig mit Hilfe der Trainingssequenzen geschätzt und an die Sendeseite zur Dimensionierung des Vorfilters übermittelt. Dies ist beispielsweise dann der Fall, wenn in Aufwärtsrichtung (Uplink) und in Abwärtsrichtung (Downlink) verschiedene Trägerfrequenzen zur Funkübertragung verwendet werden.

Oder aber die Funkübertragungskanaleigenschaften werden sendeseitig in Abhängigkeit von einem verwendeten Übertragungsverfahren bestimmt. Dies ist beispielsweise dann der Fall, wenn in Aufwärtsrichtung (Uplink) von einer Mobilstation zu einer Basisstation und in Abwärtsrichtung (Downlink) von einer Basisstation zu einer Mobilstation verschiedene Zeitschlitze einer Trägerfrequenz zur Funkübertragung verwendet werden. Da sich in diesem Fall die Funkübertragungskanaleigenschaften in Aufwärtsrichtung und in Abwärtsrichtung im wesentlichen nicht unterscheiden, sind die Funkübertragungskanaleigenschaften seitens der Basisstation aus der Aufwärtsrichtung direkt bestimmbar und stehen somit sendeseitig an der Basisstation unmittelbar zur Verfügung.

Durch das erfindungsgemäß gestaltete Vorfilter wird im Vergleich zu einem Funkkommunikationssystem ohne Vorfilterung eine Verbesserung der Kanalschätzung erzielt. Insbesondere bei einem empfangsseitig verwendeten Algorithmus zur Bildung eines mittleren quadratischen Fehlerwerts ("Mean Squared Error"), kurz MSE-Algorithmus, wird die Verbesserung in Hinsicht auf den mittleren quadratischen Fehler erzielt. Weiterhin wird eine Verwendung von verkürzten Trainingssequenzen unter Einhaltung eines vorgegebenen Fehlerwerts ermöglicht.

Dadurch, dass mit Hilfe des erfindungsgemäßen Vorfilters die Trainingssequenzen bei einem vorgegebenen Fehlerwert verkürzt werden können, werden Funkübertragungsressourcen eingespart, die vorteilhaft für eine Nutzdatenübertragung ("Payload") zur Verfügung stehen.

Die Schätzung der Funkkanalkoeffizienten wird im Aufwand reduziert und vereinfacht, da einerseits zur Vorfilterung bzw. zur Kanalschätzung lediglich statische, langzeitstabile Informationen bezüglich der räumlichen Korrelationsverhältnisse für jeden Funkübertragungskanal bzw. für jedes Antennensystem verwendet werden. Andererseits werden durch Verwendung von verkürzten Trainingssequenzen die zur Kanalschätzung durchzuführenden Berechnungen im Aufwand reduziert.

Die Dimensionierung des Vorfilters ist aufgrund der lediglich langsam erfolgenden Änderung der Funkkanalkoeffizienten besonders vorteilhaft nur in größeren Zeitabständen durchzuführen.

Bei der Schätzung der Funkkanalkoeffizienten werden Einflüsse auf den Funkübertragungskanal, wie beispielsweise Schwund ("Fading"), berücksichtigt.

Das erfindungsgemäße Verfahren zur Vorfilterung ist neben den MIMO-Funkkommunikationssystemen auch bei so genannten "Multiple-Input-Single-Output", kurz "MISO", Funkkommunikationssystemen einsetzbar.

Bei einem MISO-Funkkommunikationssystem werden sendeseitig eine Vielzahl von Sendeantennensystemen, die gegebenenfalls als intelligente Antennenanordnung, auch bekannt als "Smart Antenna", betrieben werden, verwendet, während empfangsseitig lediglich ein einzelnes Antennensystem angeordnet ist.

Das erfindungsgemäße Verfahren verwendet vorteilhaft die Erkenntnis, dass bei einer typischen Freiraumausbreitung die Funkübertragungskanäle bzw. die den Funkübertragungskanälen jeweils zugeordneten Sende- bzw. Empfangsantennensysteme zueinander räumlich korreliert sind. Dabei sind insbesondere bei einer direkten freien Sichtverbindung ("Line of Sight") die Funkkanalkoeffizienten genau zu bestimmen, da sie sich lediglich über einen längeren Beobachtungszeitraum ändern.

Zum besseren Verständnis der Erfindung wird nachfolgend ein typisches MIMO-Funkkommunikationssystem in allgemeiner Form beispielhaft dargestellt.

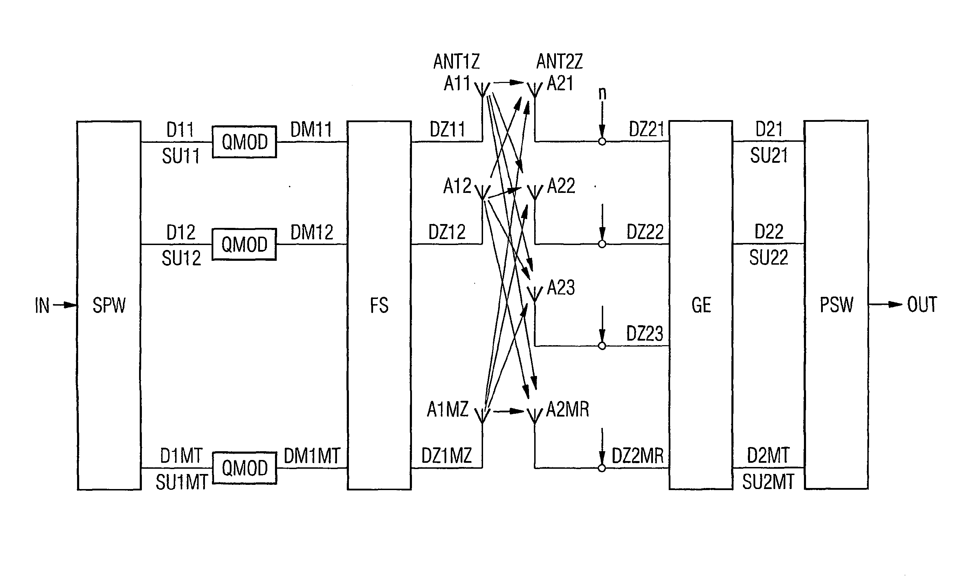

FIG 1 zeigt ein Blockschaltbild eines MIMO-Funkkommunikationssystems. Ein digitales Einganssignal IN, das seriell aufeinanderfolgende Bits aufweist, gelangt sendeseitig an einen Seriell/Parallel-Wandler SPW, mit dessen Hilfe das Eingangssignal IN in insgesamt MT Datenfolgen D11, D12, ..., D1MT für MT sendeseitige Subkanäle SU11, SU12, ..., SU1MT aufgeteilt wird. Jeder einzelne der MT sendeseitigen Subkanäle SU11 bis SU1MT weist zur Modulation der einzelnen Datenfolgen D11 bis D1MT jeweils einen Modulator QMOD auf, wobei hier die Datenfolgen D11 bis D1MT mit Hilfe eines identischen Modulationsverfahrens moduliert werden.

Modulierte Datenfolgen DM11, DM12, ..., DM1MT gelangen über ein Vorfilter FS zur Abstrahlung an eine sendeseitige Antenneneinrichtung ANT1Z, die insgesamt MZ einzelne Antennensysteme A11, A12, ..., A1MZ aufweist. Mit Hilfe einer empfangsseitigen Antenneneinrichtung ANT2Z, die insgesamt MR einzelne Antennensysteme A21, A22, ..., A2MR aufweist, werden MR Datenfolgen DZ21, DZ22, ..., DZ2MR empfangen. Diese weisen jeweils einen Rauschanteil auf, der durch einen Rauschvektor n dargestellt ist.

Die MR Datenfolgen DZ21 bis DZ2MR gelangen an ein Matrixfilter GE, das MT Datenfolgen D21, D22, ..., D2MT für MT empfangsseitige Subkanäle SU21, SU22, ..., SU2MT bildet. Die Datenfolgen D21 bis D2MT gelangen an einen Parallel/Seriell-Wandler PSW, der ein Ausgangssignal OUT mit seriell aufeinanderfolgenden Bits bildet. Die Eigenschaften der Übertragungskanäle sind als Funkkanalkoeffizienten in einer Matrix zusammenfassbar.

Im Folgenden wird die erfindungsgemäße Vorfilterung beispielhaft für einen empfangsseitig eingesetzten Algorithmus zur Bildung eines minimalen mittleren quadratischen Fehlerwerts ("Minimum Mean Squared Error"), kurz MMSE-Algorithmus, hergeleitet.

Es wird vorausgesetzt, dass die sendeseitigen Trainingssequenzen orthogonal zueinander dem sendeseitigen Vorfilter zur Vorverarbeitung zugeführt werden.

Nachfolgend gelten folgende Abkürzungen:

I            bezeichnet eine Einheitsmatrix,

M* bezeichnet eine konjugiert komplexe Matrix M,

$M^T$ bezeichnet eine transponierte Matrix M,

$M^H$ bezeichnet eine konjugiert transponierte Matrix M (hermitesche Matrix),

$[M]_{ij}$ bezeichnet ein Element einer Zeile i und einer Spalte j einer Matrix M,

vec(M) bildet aus Spalten einer Matrix M einen Vektor

$\otimes$ bezeichnet ein Kronecker Produkt, und

$diag(M)=diag(M)^T$ bildet eine Diagonalmatrix mit Elementen x auf der Diagonalen.

Beim MIMO-Funkkommunikationssystem wird eine Übertragung einer Trainingssequenz über einen Funkübertragungskanal mit weißem Rauschen am Empfänger modelliert durch:

$$Y = R_{\tilde{n}\tilde{n}}^{-0,5}HFS + R_{\tilde{n}\tilde{n}}^{-0,5}\widetilde{N} = R_{\tilde{n}\tilde{n}}^{-0,5}HFS + N$$

Gleichung (1)

mit:

$N_t$ als Trainingssequenzlänge,

$M_{Tx}$ als Anzahl der sendeseitigen Antennensysteme,

$M_{Rx}$ als Anzahl der empfangsseitigen Antennensysteme,

S als sendeseitige Trainingssequenzmatrix der Größe $M_{Tx}$ x $N_t$ ,

F als lineare Matrix des sendeseitigen Vorfilters, Größe $M_{TX}$ x $M_{TX}$,

H als Funkübertragungskanalmatrix mit korrelierten Funkkanalkoeffizienten, Größe $M_{Tx}$ x $M_{Rx}$,

$\widetilde{N}$ als gemessene empfangsseitige Rauschmatrix vor einem "Noise-Whitening"-Rauschfilter, Größe $M_{Rx}$ x $N_t$,

N als empfangsseitige Rauschmatrix mit weißem Rauschen nach dem "Noise Whitening"-Rauschfilter, Größe $M_{Rx}$ x $N_t$,

$R_{\tilde{n}\tilde{n}}$ als geschätzte Rauschkovarianzmatrix gemäß Gleichung (5),

Y als gemessene, verrauschte, empfangsseitige Trainingssequenzmatrix, Größe $M_{Rx}$ x $N_t$.

Bei orthogonalen Trainingssequenzen erfüllt die sendeseitige Trainingssequenzmatrix S folgende Bedingung einer diskreten Fourriertransformations-Matrix, kurz DFT-Matrix:

$$SS^H = S^H S = N_t \cdot I$$

Gleichung (2)

Zerlegt man die Rauschmatrix $\widetilde{N}$ in Spaltenvektoren mit:

$$\widetilde{N} = \left[\widetilde{n}_1, ..., \widetilde{n}_{N_t}\right]$$

Gleichung (3),

so ergibt sich die in Gleichung (1) genannte Rauschkovarianzmatrix $R_{\widetilde{n}\widetilde{n}}$ als Erwartungswert E mit $1 \leq i \leq N_t$ zu:

$$R_{\widetilde{n}\widetilde{n}} = E\left[\widetilde{n}_i \widetilde{n}_i^H\right]$$

Gleichung (4)

Die Kovarianzmatrix der Spalten der in Gleichung (1) genannten Rauschmatrix N nimmt für weißes gauß'sches Rauschen den Wert der Einheitsmatrix I an.

Im Folgenden wird eine Schätzung der Funkkanalkoeffizienten unter Verwendung des empfangsseitigen MMSE-Algorithmus und unter Verwendung des als bekannt vorausgesetzten Vorfilters betrachtet.

Dazu wird Gleichung (1) in Vektor-Schreibweise umgeformt:

$$\underbrace{vec(Y)}_{y} = (\underbrace{(FS)^T \otimes R_{\widetilde{n}\widetilde{n}}^{-0,5}}_{X}) \cdot \underbrace{vec(H)}_{h} + \underbrace{vec(N)}_{n}$$

$$y = X \cdot h + n$$

Gleichung (5),

mit h, n, y als Spaltenvektoren.

Besitzen die Spaltenvektoren h, n die Kovarianzmatrizen $R_{hh}$ und $R_{nn}$, so wird eine lineare MMSE-Kanalschätzung des Spaltenvektors h entsprechend einer aus der Druckschrift "Fundamentals of statistical signal processing volume 1 (estimation theory), Kay S. M., Prentice Hall, 1993, bekannten Gleichung durchgeführt.

Man erhält als Schätzwert für den Spaltenvektor h:

$$\hat{h} = (R_{hh}^{-1} + X^H R_{nn}^{-1} X)^{-1} X^H R_{nn}^{-1} y$$

Gleichung (6)

mit $R_{hh}$ als Kovarianzmatrix des Spaltenvektors h und mit $R_{nn}$ als Kovarianzmatrix des Spaltenvektors n.

Wie nachfolgend gezeigt wird, ist die Matrix X eine Funktion der Kovarianzmatrix $R_{hh}$. Bei weißem Rauschen entspricht die dem Spaltenvektor n zugeordnete Kovarianzmatrix $R_{nn}$ der Einheitsmatrix I.

Aus der Druckschrift "Fading correlation and its effect on the capacity of multielement antenna systems", Shiu, Foschini, Gans, Kahn, IEEE Transactions on Communications, vol. 48, no.3, pp.502-513, March 2000, ist ein vereinfachtes Modell eines korrelierten MIMO-Funkübertragungskanals bekannt.

Dabei gilt beispielsweise für eine sowohl sendeseitige als auch empfangsseitige Korrelation von Antennensystemen bzw. von Funkübertragungskanälen für die Funkübertragungskanalmatrix H:

$$H = A^H H_W B$$

Gleichung (7)

$$AA^H = R_{Rx}$$

Gleichung (8)

$$BB^H = R_{Tx}$$

Gleichung (9)

mit:

$AA^H$  als Matrizenwurzel, definiert über $R_{Rx}$,
$BB^H$  als Matrizenwurzel, definiert über $R_{Tx}$,
$H_W$  als komplexe Funkübertragungskanal-Matrix mit gauß'schen Variablen einer Einheitsvarianz, Größe $M_{Rx} \times M_{Tx}$,
$H$  als Funkübertragungskanalmatrix mit korrelierten Funkkanalkoeffizienten, Größe $M_{TX} \times M_{RX}$,
$R_{Rx}$  als normierte empfangsseitige langzeitstabile Korrelationsmatrix mit Funkkanalkoeffizienten, Größe $M_{Rx} \times M_{Rx}$, und mit
$R_{Tx}$  als normierte sendeseitige langzeitstabile Korrelationsmatrix mit Funkkanalkoeffizienten, Größe $M_{Tx} \times M_{Tx}$,

Unter Verwendung des oben genannten Kanalmodels folgt:

$$R_{hh} = R_{Tx}^* \otimes R_{Rx}$$

Gleichung (10)

Mit dem gegebenen Kanalmodell wird ein mittlerer quadratischer Fehlerwert $\varepsilon$ ("Mean Squared Error", MSE) abgeleitet:

$$\varepsilon = tr((R_{Tx}^*)^{-1} \otimes R_{Rx}^{-1} + N_t (F^* F^T \otimes R_{\tilde{n}\tilde{n}}^{-1}))^{-1}$$

Gleichung (11)

Dabei wurde Spur (bzw. "Trace") mit "tr" abgekürzt.
Unter der Voraussetzung, dass sendeseitig bzw. empfangsseitig statistische Informationen über Funkkanalkoeffizienten vorliegen, die in Gleichung (11) mit $R_{Tx}$ bzw. $R_{Rx}$ berücksichtigt werden, ist ein entsprechender Entwurf eines linearen Vorfilters F unter Berücksichtigung eines minimalen Fehlers $\varepsilon$ durchführbar.
Nachfolgend wird eine additive Überlagerung mit weißem gauß' schen Rauschen am Empfänger betrachtet und eine geschlossene Lösung für den MMSE-Algorithmus abgeleitet.

Es gilt:

$$R_{\widetilde{m}} = N_0 \cdot I$$

Gleichung (12),

mit $N_0$ als Rauschleistung.
Daraus ergibt sich der Fehlerwert $\varepsilon$ zu:

$$\varepsilon = tr((R_{Tx}^*)^{-1} \otimes R_{Rx}^{-1} + \frac{N_t}{N_0}(F^* F^T \otimes I))^{-1}$$

Gleichung (13).

Basierend auf dieser Gleichung wird nachfolgend das erfindungsgemäße Vorfilter für verschiedene Ausbreitungsszenarien entworfen.
Dabei wird einerseits durch die sendeseitige Vorfilterung, bzw. durch die optimale Anpassung der Trainingssequenzen an den Funkübertragungskanal, eine verbesserte Schätzung der Funkkanalkoeffizienten ermöglicht und andererseits wird bei einem vorgegebenen Fehlerwert $\varepsilon$ eine Verkürzung der sendeseitigen Trainingssequenzen ermöglicht.
Nachfolgend werden Eigenwert-Zerlegungen mit Eigenwerten $\Lambda_{Rx}$ und $\Lambda_{Tx}$ durchgeführt. Es gilt:

$$R_{Rx} = V_{Rx} \Lambda_{Rx} V_{Rx}^H$$

$$R_{Tx}^* = V_{Tx} \Lambda_{Tx} V_{Tx}^H$$

Gleichung (14)

mit

| | |
|---|---|
| $R_{Rx}$ | als empfangsseitige Korrelationsmatrix, |
| $R_{Tx}$ | als sendeseitige Korrelationsmatrix, |
| $V_{Rx}$ | als Eigenvektoren ($v_{R1}$, $v_{R2}$, ..., $v_{R,MRx}$) der empfangsseitigen Korrelationsmatrix $R_{Rx}$, |
| $V_{Tx}$ | als Eigenvektoren ($v_{T1}$, $v_{T2}$, ..., $v_{Tx,MTx}$) der sendeseitigen Korrelationsmatrix $R_{Tx}$, |
| $\Lambda_{Rx}$ | als Eigenwerte ($\Lambda_{R1}$, $\Lambda_{R2}$, ..., $\Lambda_{R,MRx}$) der empfangsseitigen Korrelationsmatrix $R_{Rx}$, und mit |
| $\Lambda_{Tx}$ | als Eigenwerte ($\Lambda_{T1}$, $\Lambda_{T2}$, ..., $\Lambda_{T,MTx}$) der sendeseitigen Korrelationsmatrix $R_{Tx}$. |

Ein Eigenwert $\Lambda_{Ti}$ (i=1, ..., $M_{Tx}$) mit zugeordnetem Eigenvektor $V_{Ti}$ (i=1, ..., $M_{Tx}$) ist als so genannter "Langzeit-Eigenmode" des Funkübertragungskanals zu bezeichnen, da hier Langzeiteigenschaften bezüglich der Korrelation beschrieben sind. Ein großer Eigenwert bezüglich einer mittleren zu übertragenden Leistung kennzeichnet somit einen starken Eigenmode.
Die sendeseitige Trainingssequenzmatrix S und die sendeseitigen Eigenvektoren $V_{Tx}$ sind jeweils zeilenweise beschreibbar durch:

$$S = \begin{bmatrix} s_1 \\ s_2 \\ \\ s_{M_{TX}} \end{bmatrix} \qquad V_{TX}^* = \begin{bmatrix} v_1 & v_2 & & v_{M_{TX}} \end{bmatrix}$$

Gleichung (15)

Das erfindungsgemäße Vorfilter wird beschrieben durch:

$$F^* = V_{Tx} \Phi_f$$

Gleichung (16)

mit $\Phi_f$ als Diagonalmatrix, durch die Sendeleistungen zu den Eigenmoden bzw. zu den zu übertragenden Trainingssequenzen zugeordnet werden.
Somit gilt für die Vorfilterung der Trainingssequenzen:

$$F \cdot S = V_{Tx}^* \Phi_f S$$

Gleichung (17)

Diese Gleichung beschreibt einerseits eine Leistungszuordnung zu den Trainingssequenzen, die mit Hilfe des Vektors $\Phi_f$ durchgeführt wird, und andererseits ein Beamforming, das an den Trainingssequenzen mit Hilfe der Eigenvektoren $V_{Tx}^*$ der sendeseitigen Korrelationsmatrix $R_{Tx}$ durchgeführt wird.
Für eine Trainingssequenz $s_k$ wird eine Folge von in einer Matrix $T_k$ gegebenen Sendevektoren über die Sendeantennen abgestrahlt. Es gilt:

$$T_k = \Phi_k V_k s_k$$

für alle k.

Gleichung 18

Gleichung (18) ist interpretierbar als Beamforming von einer Trainingssequenz $s_k$ mit einem Eigenvektor $v_k$, wobei der Trainingssequenz $s_k$ eine Leistung $\Phi_k$ zugeordnet wird.
Aus Gleichung (13) ergibt sich für den Fehlerwert $\varepsilon$:

$$\varepsilon = tr(\Lambda_{Tx}^{-1} \otimes \Lambda_{Rx}^{-1} + \frac{N_t}{N_0}(V_{Tx}^H F^* F^T V_{Tx} \otimes I))^{-1}$$

Gleichung (19)

Mit der Diagonalmatrix $\Phi_f$ zur Sendeleistungszuordnung ergibt sich für den Fehlerwert $\varepsilon$:

$$\varepsilon = tr(\Lambda_{Tx}^{-1} \otimes \Lambda_{Rx}^{-1} + \frac{N_t}{N_0}(\Phi_f \Phi_f^H \otimes I))^{-1}$$

Gleichung (20)

Nachfolgend wird in einem ersten Ausführungsbeispiel sowohl eine empfangsseitige als auch eine sendeseitige Korrelation der Antennensysteme bzw. der Funkübertragungskanäle betrachtet.

Eine Minimierung des Fehlerwerts $\varepsilon$ aus Gleichung (20) wird mit Hilfe des sendeseitigen Vorfilters durchgeführt. Unter der Voraussetzung einer Leistungsbeschränkung folgt als Optimierungsproblem:

$$\min_{\Phi_f} tr(\Lambda_{Tx}^{-1} \otimes \Lambda_{Rx}^{-1} + \frac{N_t}{N_0}(\Phi_f \Phi_f^H \otimes I))^{-1}$$

(Gleichung 21),

wobei die Nebenbedingung der Leistungsbeschränkung bestimmt ist durch $\rho$ mit:

$$\rho = \sum_{l=0}^{M_{Tx}} \Phi_{f,l}^2$$

Gleichung (22)

Die Minimierung des Fehlerwerts erfolgt unter Beachtung der Nebenbedingung durch numerische Berechnungs- und Optimierungsverfahren.

Nachfolgend wird in einem zweiten Ausführungsbeispiel eine lediglich sendeseitige Korrelation der Antennensysteme bzw. der Funkübertragungskanäle betrachtet. Dieses Beispiel beschreibt ein typisches Szenario in einem zellularen Funkkommunikationssystem mit einer freistehenden Sendeantennenanordnung.

In Matrix-Schreibweise folgt für Elemente der Diagonalmatrix $\Phi_f$ :

$$\Phi_f = \left[\frac{1}{M_{Tx}}((\frac{N_t}{N_0})^{-1} tr(\Lambda_{Tx}^{-1}) + \rho) \cdot I - (\frac{N_t}{N_0})^{-1} \Lambda_{Tx}^{-1}\right]^{0,5}$$

Gleichung (23)

mit der Nebenbedingung, dass alle Elemente der Diagonalmatrix $\Phi_f$ größer als 0 sind. Dies kann beispielsweise mit einem iterativen Verfahren sichergestellt werden.

Nachfolgend wird in einem dritten Ausführungsbeispiel eine lediglich empfangsseitige Korrelation von Antennensystemen betrachtet.

Es ergibt sich, dass alle Elemente der Diagonalmatrix $\Phi_f$ größengleich sind. Es gilt:

$$\Phi_f \ = \ \rho \ / \ M_{Tx} \ I$$

Gleichung (24)

In diesem Spezialfall findet lediglich eine ungerichtete Übertragung ohne Beamforming statt.

**Patentansprüche**

1. Verfahren zur Vorfilterung von Trainingssequenzen in einem Funkkommunikationssystem, bei dem zumindest sendeseitig eine aus mehreren Antennensystemen bestehende Antennenanordnung verwendet wird,

   - bei dem die Trainingssequenzen über ein Vorfilter den sendeseitigen Antennensystemen zur Abstrahlung zugeführt werden,
   - bei dem anhand empfangener Trainingssequenzen eine Kanalschätzung von Funkübertragungskanaleigenschaften, die durch räumliche Korrelationen beschrieben werden, durchgeführt wird,
   - bei dem zur Verbesserung der mit Hilfe der Trainingssequenzen durchgeführten Kanalschätzung die Trainingssequenzen durch das Vorfilter an die Funkübertragungskanaleigenschaften angepasst werden, wobei
   - das Vorfilter in Abhängigkeit der räumlichen Korrelationen zum erreichen eines vorgegebener Fehlerwertes eines zur Kanalschätzung verwendeten Algorithmus dimensioniert wird.

2. Verfahren nach Anspruch 1, bei dem der empfangsseitige Fehlerwert als Minimalwert bei einer vorgegebenen Trainingssequenzlänge vorgegeben wird oder bei dem der vorgegebene Fehlerwert mittels einer Anpassung der Länge der Trainingssequenzen erreicht wird.

3. Verfahren nach einem der vorhergehenden Ansprüche, bei dem empfangsseitig ein MSE-Algorithmus zur Kanalschätzung verwendet wird.

4. Verfahren nach einem der vorhergehenden Ansprüche, bei dem durch das Vorfilter für jede Trainingssequenz ein Beamforming-Verfahren durchgeführt wird, indem durch das Vorfilter sowohl eine Leistungszuordnung als auch eine Antennensystemzuordnung zur Trainingssequenz erfolgt.

5. Verfahren nach einem der vorhergehenden Ansprüche, bei dem die Vorfilterung der Trainingssequenzen anhand folgender Gleichung durchgeführt wird:

$$F \cdot S = V_{Tx}^{*} \Phi_{f} S$$

mit:

   S als sendeseitiger Trainingssequenzmatrix,
   F als sendeseitiger Vorfiltermatrix,
   $V_{Tx}$ als Eigenvektoren einer langzeitstabilen sendeseitigen Korrelationsmatrix mit sendeseitigen Funkkanalkoeffizienten, und mit
   $\Phi_f$ als Diagonalmatrix zur Leistungszuordnung

6. Verfahren nach Anspruch 5, bei dem die Diagonalmatrix $\Phi_f$ unter Berücksichtigung eines MSE-Fehlerwerts $\varepsilon$ anhand folgender Formel gebildet wird:

$$\varepsilon = tr(\Lambda_{Tx}^{-1} \otimes \Lambda_{Rx}^{-1} + \frac{N_t}{N_0}(\Phi_f \Phi_f^{H} \otimes I))^{-1}$$

mit

N$_t$ als Trainingssequenzlänge,
N$_0$ als Rauschleistung,
I als Einheitsmatrix,
$\Lambda_{Rx}$ als Eigenwerte einer empfangsseitigen langzeitstabilen Korrelationsmatrix mit empfangsseitigen Funkkanalkoeffizienten,
$\Lambda_{Tx}$ als Eigenwerte der sendeseitigen langzeitstabilen Korrelationsmatrix mit sendeseitigen Funkkanalkoeffizienten.

7. Verfahren nach Anspruch 5 oder 6, bei dem eine Minimierung des MSE-Fehlerwerts $\varepsilon$ bei einer sendeseitigen und bei einer empfangsseitigen Korrelation von Funkübertragungskanälen bzw. Antennensystemen im Hinblick auf die Diagonalmatrix $\Phi_f$ anhand folgender Formel durchgeführt wird:

$$\underset{\Phi_f}{\min}\, tr(\Lambda_{Tx}^{-1} \otimes \Lambda_{Rx}^{-1} + \frac{N_t}{N_0}(\Phi_f \Phi_f^H \otimes I))^{-1}$$

wobei als Nebenbedingung eine Leistungsbeschränkung anhand folgender Formel bestimmt wird:

$$\rho = \sum_{l=0}^{M_{Tx}} \Phi_{f,l}^2$$

8. Verfahren nach Anspruch 5 oder 6, bei dem bei einer sendeseitigen Korrelation von Funkübertragungskanälen bzw. Antennensystemen für Elemente der Diagonalmatrix $\Phi_f$ gilt:

$$\Phi_{f,l} = \left[ \frac{1}{M_{Tx}}((\frac{N_t}{N_0})^{-1} tr(\Lambda_{Tx}^{-1}) + \rho) \cdot I - (\frac{N_t}{N_0})^{-1} \Lambda_{Tx}^{-1} \right]^{0,5}$$

mit der Nebenbedingung $\Phi_{f,1} \geq 0$.

9. Sendestation und/oder Empfangsstation eines Funkkommunikationssystems mit Mitteln, die zur Durchführung des Verfahrens nach einem der Ansprüche 1 bis 8 ausgestaltet sind.

**Claims**

1. Method for prefiltering training sequences in a radio communication system, in which an antenna arrangement consisting of a number of antenna systems is used at least at the transmitting end,

   - in which training sequences are supplied for radiation to the antenna systems at the transmitting end via a prefilter,
   - in which, by means of received training sequences, a channel estimation of radio transmission channel characteristics which are described by spatial correlations is performed,
   - in which, for improving the channel estimation performed with the aid of the training sequences, the training sequences are adapted to the radio transmission channel characteristics by the prefilter, wherein
   - the prefilter is dimensioned in dependence on the spatial correlations for achieving a predetermined error value of an algorithm used for the channel estimation.

2. Method according to Claim 1, in which the error value at the receiving end is predetermined as minimum value with a predetermined training sequence length or in which the predetermined error value is achieved by adapting the length of the training sequences.

3. Method according to one of the preceding claims, in which an MSE algorithm is used for channel estimation at the receiving end.

4. Method according to one of the preceding claims, in which a beam forming method is performed for each training sequence by the prefilter in that both a correlation of power and a correlation of antenna system with the training sequence is effected by the prefilter.

5. Method according to one of the preceding claims, in which the prefiltering of the training sequences is performed by means of the following equation:

$$F \cdot S = V_{Tx}^{*} \Phi_f S$$

with:

S as training sequence matrix at the transmitting end,
F as prefilter matrix at the transmitting end,
$V_{Tx}$ as eigenvectors of a correlation matrix with long term stability at the transmitting end, with radio channel coefficients at the transmitting end, and with
$\Phi_f$ as diagonal matrix for power correlation.

6. Method according to Claim 5, in which the diagonal matrix $\Phi_f$ is formed by means of the following formula, taking into consideration an MSE error value $\varepsilon$:

$$\varepsilon = tr(\Lambda_{Tx}^{-1} \otimes \Lambda_{Rx}^{-1} + \frac{N_t}{N_0}(\Phi_f \Phi_f^{H} \otimes I))^{-1}$$

with

$N_t$ as training sequence length
$N_0$ as noise power
I as unit matrix,
$\Lambda_{Rx}$ as eigenvalues of a correlation matrix with long term stability at the receiving end with radio channel coefficients at the receiving end,
$\Lambda_{Tx}$ as eigenvalues of the correlation matrix with long term stability at the transmitting end with radio channel coefficients at the transmitting end.

7. Method according to Claim 5 or 6, in which a minimization of the MSE error value $\varepsilon$, with a correlation of radio transmission channels or antenna systems, respectively, at a transmitting end and a receiving end with respect to the diagonal matrix $\Phi_f$ is performed by means of the following formula:

$$\min_{\Phi_f} tr(\Lambda_{Tx}^{-1} \otimes \Lambda_{Rx}^{-1} + \frac{N_t}{N_0}(\Phi_f \Phi_f^{H} \otimes I))^{-1}$$

wherein a power restriction is determined as secondary condition by means of the following formula:

$$\rho = \sum_{l=0}^{M_{Tx}} \Phi_{f,l}^2$$

**8.** Method according to Claim 5 or 6, in which, in the case of a correlation of radio transmission channels or antenna systems, respectively, at the transmitting end, the following applies for elements of the diagonal matrix $\Phi_f$:

$$\Phi_{f,l} = \left[ \frac{1}{M_{Tx}} ((\frac{N_t}{N_0})^{-1} tr(\Lambda_{Tx}^{-1}) + \rho) \cdot I - (\frac{N_t}{N_0})^{-1} \Lambda_{Tx}^{-1} \right]^{0,5}$$

with the secondary condition $\Phi_{f,1} \geq 0$.

**9.** Transmitting station and/or receiving station of a radio communication system with means which are designed for carrying out the method according to one of Claims 1 to 8.

**Revendications**

**1.** Procédé de préfiltrage de séquences d'apprentissage dans un système de radiocommunication, dans lequel est utilisé, au moins côté émetteur, un dispositif d'antenne composé de plusieurs systèmes d'antenne, dans lequel

- les séquences d'apprentissage sont amenées aux systèmes d'antenne côté émetteur via un préfiltre aux fins de leur émission,
- à l'aide de séquences d'apprentissage reçues, une estimation de canal de caractéristiques de canaux de transmission radio qui sont décrites par des corrélations spatiales est effectuée,
- pour améliorer l'estimation de canal effectuée à l'aide des séquences d'apprentissage, les séquences d'apprentissage sont adaptées par le préfiltre aux caractéristiques de canaux de transmission radio,
- le préfiltre étant dimensionné en fonction des corrélations spatiales pour obtenir une valeur d'erreur prédéterminée d'un algorithme utilisé aux fins de l'estimation de canal.

**2.** Procédé selon la revendication 1, dans lequel la valeur d'erreur côté récepteur est prédéterminée en tant que valeur minimale pour une longueur de séquence d'apprentissage prédéterminée ou dans lequel la valeur d'erreur prédéterminée est obtenue au moyen d'une adaptation de la longueur des séquences d'apprentissage.

**3.** Procédé selon l'une des revendications précédentes, dans lequel est utilisé, côté récepteur, un algorithme MSE aux fins de l'estimation de canal.

**4.** Procédé selon l'une des revendications précédentes, dans lequel est effectué, par le préfiltre, pour chaque séquence d'apprentissage, un procédé de formation de faisceaux par affectation, par le préfiltre, non seulement d'une puissance, mais aussi d'un système d'antenne à la séquence d'apprentissage.

**5.** Procédé selon l'une des revendications précédentes, dans lequel le préfiltrage des séquences d'apprentissage est effectué à l'aide de l'équation suivante

$$F \cdot S = V_{Tx}^* \Phi_f S$$

avec

S étant la matrice de séquences d'apprentissage côté émetteur,
F étant la matrice du préfiltre côté émetteur,
$V_{Tx}$ étant des vecteurs propres d'une matrice de corrélation stable à long terme côté émetteur avec des coefficients de canaux radio côté émetteur et

$\Phi_f$ étant la matrice diagonale pour l'affectation de puissance.

**6.** Procédé selon la revendication 5, dans lequel la matrice diagonale $\Phi_f$, compte tenu d'une valeur d'erreur MSE $\varepsilon$, est formée à l'aide de la formule suivante:

$$\varepsilon = tr(\Lambda_{Tx}^{-1} \otimes \Lambda_{Rx}^{-1} + \frac{N_t}{N_0}(\Phi_f \Phi_f^H \otimes I))^{-1}$$

avec

N$_t$ étant la longueur des séquences d'apprentissage,
N$_0$ étant la puissance du bruit,
I étant une matrice unitaire,
$\Lambda_{Rx}$ étant des valeurs propres d'une matrice de corrélation stable à long terme côté récepteur avec des coefficients de canaux radio côté récepteur,
$\Lambda_{Tx}$ étant des valeurs propres de la matrice de corrélation stable à long terme côté émetteur avec des coefficients de canaux radio côté émetteur.

**7.** Procédé selon la revendication 5 ou 6, dans lequel une minimisation de la valeur d'erreur MSE $\varepsilon$, étant donné une corrélation de canaux de transmission radio resp. de systèmes d'antenne côté émetteur et côté récepteur, est effectuée à l'aide de la formule suivante au regard de la matrice diagonale $\Phi_f$:

$$\min_{\Phi_f} tr(\Lambda_{Tx}^{-1} \otimes \Lambda_{Rx}^{-1} + \frac{N_t}{N_0}(\Phi_f \Phi_f^H \otimes I))^{-1}$$

une limitation de puissance étant déterminée, en tant que condition secondaire, à l'aide de la formule suivante:

$$\rho = \sum_{l=0}^{M_{Tx}} \Phi_{f,l}^2$$

**8.** Procédé selon la revendication 5 ou 6, dans lequel, étant donné une corrélation de canaux de transmission radio resp. de systèmes d'antenne côté émetteur, on a, pour des éléments de la matrice diagonale $\Phi_f$:

$$\Phi_{f,l} = \left[ \frac{1}{M_{Tx}}((\frac{N_t}{N_0})^{-1} tr(\Lambda_{Tx}^{-1}) + \rho) \cdot I - (\frac{N_t}{N_0})^{-1} \Lambda_{Tx}^{-1} \right]^{0,5}$$

avec la condition secondaire $\Phi_{f,1} \geq 0$.

**9.** Station émettrice et/ou station réceptrice d'un système de radiocommunication comprenant des moyens qui sont réalisés pour permettre l'exécution du procédé selon l'une des revendications 1 à 8.

EP 1 649 652 B1

IN → SPW

D11
SU11 → QMOD → DM11

D12
SU12 → QMOD → DM12

D1MT
SU1MT → QMOD → DM1MT

FS

DZ11
DZ12
DZ1MZ

ANT1Z
A11
A12
A23
A1MZ

ANT2Z
A21
A22
A2MR

n

DZ21
DZ22
DZ23
DZ2MR

GE

D21
SU21
D22
SU22
D2MT
SU2MT

PSW → OUT

**EP 1 649 652 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **MARIO KIESSLING et al.** Performance Analysis of MIMO Maximum Likelihood Receivers with Channel Correlation, Colored Gaussian Noise, and Linear Prefiltering. *ICC 2003, IEEE International Conference on Communications,* 11. Mai 2003, vol. 5, 3026-3030
- Statistical Prefiltering for MIMIO Systems with Linear Receivers in the Presence of Transmit Correlation. *Kiessling, 57th IEEE Semiannual Vehicular Technology Conference, VTC 2003,* 22. April 2003, vol. 1, 267-271
- Statistical Prefiltering for MMSE and ML Receivers with Correlated MIMO Channels. *Kiessling, WCNC 2003, IEEE Wireless Communications and Networking Conference Record,* 20. Marz 2003, vol. 2, 919-924
- **KAY S. M.** *Fundamentals of statistical signal processing,* 1993, vol. 1
- **SHIU ; FOSCHINI ; GANS ; KAHN.** Fading correlation and its effect on the capacity of multielement antenna systems. *IEEE Transactions on Communications,* Marz 2000, vol. 48 (3), 502-513